# EUROPEAN PATENT SPECIFICATION

(11) **EP 4 160 791 B1**
(45) Date of publication and mention of the grant of the patent: **30.07.2025**
(21) Application number: 21814367.5
(22) Date of filing: 12.05.2021
(51) Int. Cl.: H01M 50/183, H01M 10/04, H01M 10/0587, H01M 50/107, H01M 50/131, H01M 50/152, H01M 50/184, H01M 50/186, H01M 50/474

(54) **CYLINDRICAL BATTERY**
ZYLINDRISCHE BATTERIE
BATTERIE CYLINDRIQUE

(30) Priority: 28.05.2020 JP 2020093066
(43) Date of publication of application: 05.04.2023
(73) Proprietor: Panasonic Energy Co., Ltd., Osaka 570-8511 (JP)
(72) Inventor: NOGAMI, Takahiro, Osaka-shi, Osaka 540-6207 (JP)
(74) Representative: Novagraaf International SA
(86) International application number: PCT/JP2021/017972
(87) International publication number: WO 2021/241215

(56) References cited:
- EP-A1- 2 157 633
- WO-A1-2013/125244
- WO-A1-2019/194253
- WO-A1-2019/194253
- JP-A- 2009 302 056
- JP-A- 2013 069 597
- JP-A- H0 696 748

## Description

### TECHNICAL FIELD

The present disclosure relates to a cylindrical battery.

### BACKGROUND ART

A cylindrical battery has a bottomed cylindrical outer can and a sealing assembly that seals an opening of the outer can (see, for example, Patent Literature 1). In the cylindrical battery disclosed in Patent Literature 1, the outer can is caulked in a radial direction of the sealing assembly to compress a gasket interposed between the outer can and the sealing assembly. In such a lateral caulking-type cylindrical battery, there is no need to provide a groove between the gasket and an electrode assembly in the outer can, so that the volume required to house the electrode assembly can be increased and thereby a larger capacity of the battery can be achieved. A conventional cylindrical battery provides such a groove and an insulating plate arranged and fixed between the electrode assembly and the sealing assembly (see Patent Literature 2: EP 2157633 A1)

### CITATION LIST

### PATENT LITERATURE

Patent Literature 1: WO 2019/194253 Patent Literature 2: EP 2157633 A1

### SUMMARY

### TECHNICAL PROBLEM

However, in the cylindrical battery disclosed in Patent Literature 1, there is no disclosure about an insulating plate arranged between the electrode assembly and the sealing assembly nor about fixing of the insulating plate. When the insulating plate is not fixed in the cylindrical battery and in this state, a negative electrode plate extends due to overcharging or the like and causes dislocation or inclination of the insulating plate, a contact between a negative electrode plate and a positive electrode lead or a contact between the negative electrode plate and the sealing assembly may occur and cause an internal short circuit.

It is an advantage of the present disclosure to provide a cylindrical battery capable of fixing an insulating plate arranged between an electrode assembly and a sealing assembly.

### SOLUTION TO PROBLEM

A cylindrical battery in one aspect of the present disclosure is a cylindrical battery comprises: an electrode assembly having a positive electrode plate and a negative electrode plate wound through a separator; an electrolyte;
a bottomed cylindrical outer can configured to house the electrode assembly and the electrolyte; a sealing plate configured to seal an opening of the outer can; a gasket arranged on a circumferential edge of the sealing plate; and an insulating plate arranged above the electrode assembly to insulate the electrode assembly and the sealing plate. The gasket is compressed in a radial direction between an end face of the circumferential edge of the sealing plate and the outer can, and the outer can has a locking part to be engaged with the circumferential edge of the insulating plate.

### ADVANTAGEOUS EFFECTS OF INVENTION

According to one aspect of the present disclosure, the insulating plate arranged between the electrode assembly and the sealing assembly can be fixed. This prevents occurrence of an internal short circuit.

### BRIEF DESCRIPTION OF DRAWINGS

FIG. 1 is a sectional view of a cylindrical battery as an example of an embodiment.
FIGS. 2(A) and 2(B) are schematic views illustrating part of a manufacturing step of manufacturing the cylindrical battery as the example of the embodiment.
FIG. 3 is a sectional view of a cylindrical battery as another example of the embodiment.
FIGS. 4(A) and 4(B) are schematic views illustrating part of a manufacturing step of manufacturing the cylindrical battery as another example of the embodiment.

### DESCRIPTION OF EMBODIMENTS

Hereinafter, an embodiment of the present disclosure will be described with reference to the drawings. Shapes, materials, and the number described below are merely exemplary, and modifications are possible as appropriate according to the specification of the cylindrical battery. In all the drawings shown below, like components are designated by like reference signs.

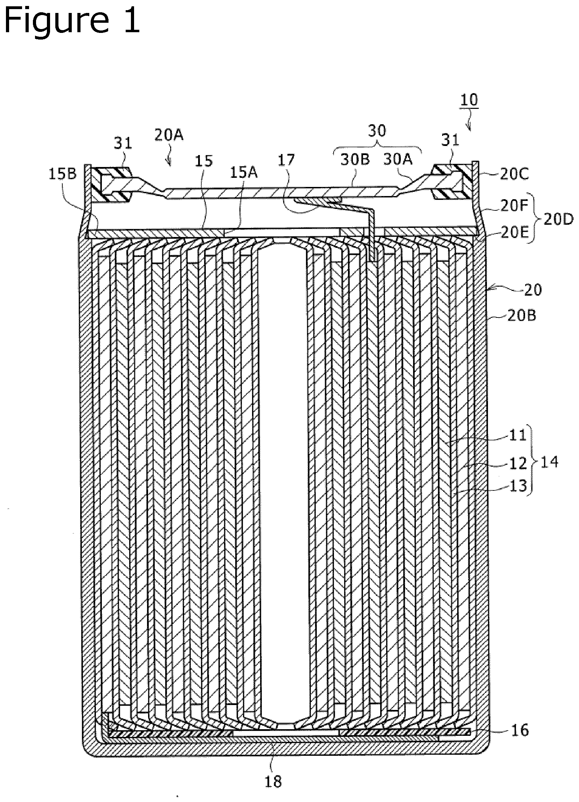

With reference to FIG. 1, a cylindrical battery 10 as an example of the embodiment will be described. FIG. 1 is a sectional view of the cylindrical battery 10.

As shown in FIG. 1, the cylindrical battery 10 comprises an electrode assembly 14, an electrolyte, an outer can 20 that houses the electrode assembly 14 and the electrolyte, and a sealing plate 30 that seals an opening 20A of the outer can 20. The electrode assembly 14 has a structure including a positive electrode plate 11, a negative electrode plate 12, and a separator 13, the positive electrode plate 11 and the negative electrode plate 12 being wound into a spiral shape through the separator 13. The cylindrical battery 10 further comprises an upper insulating plate 15 arranged above the electrode assembly 14 and a lower insulating plate 16 arranged below the electrode assembly 14. Hereinafter, for convenience of description, the side of the cylindrical battery 10 closer to the sealing plate 30 (the side of the outer can 20 closer to the opening 20A) is defined as an upper side, and the bottom side of the outer can 20 is defined as a lower side.

The positive electrode plate 11 has a positive electrode core, and a positive electrode mixture layer formed on at least one face of the core. As the positive electrode core, a metal foil that is stable in a potential range of the positive electrode plate 11, such as aluminum and aluminum alloy, a film with the metal arranged on its surface layer may be used. The positive electrode mixture layer preferably contains a positive electrode active material, a conductive agent such as acetylene black, and a binding agent such as polyvinylidene fluoride, and is formed on both the faces of the positive electrode core. As the positive electrode active material, lithium-transition metal composite oxide is used, for example. The positive electrode plate 11 can be manufactured by coating the positive electrode core with positive electrode mixture slurry containing the positive electrode active material, a conductive agent, a binding agent, and the like, drying the coating, and then compressing the coating to form a positive electrode mixture layer on both the faces of the core.

The negative electrode plate 12 has a negative electrode core, and a negative electrode mixture layer formed on at least one face of the core. As the negative electrode core, a metal foil that is stable in a potential range of the negative electrode plate 12, such as coper and copper alloy, a film with the metal arranged on its surface layer may be used. The negative electrode mixture layer preferably contains a negative electrode active material and a binding agent such as styrene-butadiene rubber (SBR), and is formed on both the faces of the negative electrode core. As the negative electrode active material, graphite, silicon-containing compounds, and the like, are used, for example. The negative electrode plate 12 can be manufactured by coating the negative electrode core with negative electrode mixture slurry containing a negative electrode active material, a binding agent, and the like, drying the coating, and then compressing the coating to form a negative electrode mixture layer on both the faces of the core.

As the electrolyte, non-aqueous electrolyte is used, for example. The non-aqueous electrolyte contains non-aqueous solvent and electrolyte salt dissolved in non-aqueous solvent. As the non-aqueous solvent, esters, ethers, nitriles, amides, and a mixture of two or more of the group consisting of esters, ethers, nitriles, and amides can be used. The non-aqueous solvent may contain halogen substitutions that replace at least some of hydrogen atoms in these solvents with halogen atoms such as fluorine. The non-aqueous electrolyte is not limited to liquid electrolyte, and may be solid electrolyte. As the electrolyte salt, lithium salt such as LiPF6 is used. The type of electrolyte is not particularly limited, and may be aqueous electrolyte.

The upper insulating plate 15 is a member arranged above the electrode assembly 14 to insulate the electrode assembly 14 and the sealing plate 30. The upper insulating plate 15 is formed into a disk shape having an opening 15A at the center in a radial direction and a through-hole that allows insertion of the positive electrode lead 17. The diameter of the upper insulating plate 15 is larger than an inner diameter of a first cylinder part 20B of the outer can 20 described later, and smaller than a maximum inner diameter of a locking part 20D described later. The positive electrode lead 17 connected to the positive electrode plate 11 extends through the through-hole of the upper insulating plate 15 toward the sealing plate 30. The positive electrode lead 17 is connected by welding or the like to a central bottom of the sealing plate 30, so that the sealing plate 30 serves as a positive electrode external terminal.

The lower insulating plate 16 is arranged below the electrode assembly 14 to insulate the electrode assembly 14 and the outer can 20. The lower insulating plate 16 is formed into a disk shape having an opening formed at the center in the radial direction. The negative electrode lead 18 connected to the negative electrode plate 12 extends outside the lower insulating plate 16 along the bottom of the outer can 20. The negative electrode lead 18 is connected by welding or the like to the inside surface of the bottom part of the outer can 20, so that the outer can 20 serves as a negative electrode external terminal.

As described above, the cylindrical battery 10 comprises the outer can 20 and the sealing plate 30 to seal the opening 20A of the outer can 20. The outer can 20 is a bottomed cylindrical metal container having a bottom and a cylinder part. The bottom has a disk shape, and the cylinder part is formed into a cylindrical shape along an outer edge of the bottom. The cylinder part, which is formed above the bottom, includes a first cylinder part 20B that houses the electrode assembly 14, a second cylinder part 20C that is thinner than the first cylinder part 20B to allow the gasket 31 to be compressed so as to fix the sealing plate 30 by caulking, and the locking part 20D formed between the first cylinder part 20B and the second cylinder part 20C to engage with a circumferential edge 15B of the upper insulating plate 15.

The first cylinder part 20B is a cylindrical portion that houses the electrode assembly 14. The first cylinder part 20B has a height substantially identical to the height of the electrode assembly 14.

The second cylinder part 20C is a cylindrical portion that allows the gasket 31 to be compressed to fix the sealing plate 30 by caulking. The second cylinder part 20C preferably has a thickness about 3/5 to 4/5 of the thickness of the first cylinder part 20B. The second cylinder part 20C is caulked in the radial direction and formed to be smaller in diameter than the first cylinder part 20B. The second cylinder part 20C may have protrusions formed in a circumferential direction on its inner surface. This can increase the force to compress the gasket 31.

The locking part 20D is a cylindrical portion formed between the first cylinder part 20B and the second cylinder part 20C to engage with the circumferential edge 15B of the upper insulating plate 15. The locking part 20D is formed so as to include an inner portion of an upper end face 20E of the first cylinder part 20B, and an inclination part 20F connecting between the second cylinder part 20C and an external portion of the upper end face 20E of the first cylinder part 20B. The inclination part 20F is formed to have a smaller diameter toward the upper side. The thickness of the inclination part 20F is identical to the thickness of the second cylinder part 20C.

The locking part 20D engages with the circumferential edge 15B of the upper insulating plate 15, so that the upper insulating plate 15 is fixed to the outer can 20. More specifically, the circumferential edge 15B of the upper insulating plate 15 is interposed and fixed between the inner circumferential side of the upper end face 20E of the first cylinder part 20B and the inclination part 20F.

The locking part 20D can fix the upper insulating plate 15. Hence, in the event where, for example, the upper insulating plate 15 shifts and inclines, and the negative electrode plate 12 is elongated during repeated charge and discharge cycles, there is no risk of internal short circuits caused due to a contact between the negative electrode plate 12 and the positive electrode lead 17, or a contact between the negative electrode plate 12 and the sealing plate 30 in the opening 15A of the upper insulating plate 15.

The sealing plate 30, which is a metal valve, can include other members such as a terminal cap arranged on its upper face. The sealing plate 30 is configured such a center 30B on the inner circumferential side of the circumferential edge 30A projects toward the electrode assembly 14 from the circumferential edge 30A. The bottom of the center 30B is connected to the positive electrode plate 11 via the positive electrode lead 17, so that the sealing plate 30 serves as a positive electrode terminal of the cylindrical battery 10. Since the sealing plate 30 is constituted of a smaller number of components, cost and time required for processing and assembling can be reduced.

The gasket 31 is present between the opening 20A of the outer can 20 and the sealing plate 30 that seals the opening 20A. The gasket 31 is a flexible insulating material. When the gasket 31 is compressed in the radial direction of the sealing plate 30 while providing insulation between the sealing plate 30 that is a positive electrode terminal and the outer can 20 that is a negative electrode terminal, sealability inside the cylindrical battery 10 is ensured.

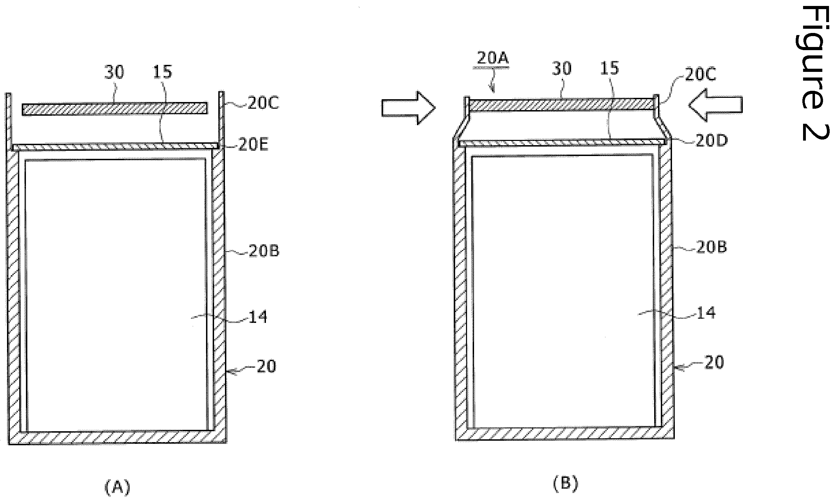

With reference to FIGS. 2(A) and 2(B), a manufacturing step of the cylindrical battery 10 will be described. FIGS. 2(A) and 2(B) are schematic views showing part of the manufacturing step.

In the manufacturing step of the cylindrical battery 10, the electrode assembly 14 and the bottomed cylindrical outer can 20, having the first cylinder part 20B and the second cylinder part 20C by drawing of a steel sheet, are first manufactured. Then, the electrode assembly 14 is inserted into the first cylinder part 20B of the outer can 20.

Then, as shown in FIG. 2(A), the upper insulating plate 15 is engaged with the inside of the upper end face 20E of the first cylinder part 20B of the outer can 20. Furthermore, as shown in FIG. 2(B), electrolyte is injected into the outer can 20, and the sealing plate 30 is inserted into the second cylinder part 20C of the outer can 20. The second cylinder part 20C of the outer can 20 is caulked in the radial direction from the outside of the outer can 20 such that the opening 20A of the outer can 20 is sealed by the second cylinder part 20C through the gasket 31.

When the second cylinder part 20C of the outer can 20 is caulked in the radial direction, a lower part of the second cylinder part 20C is formed as the inclination part 20F, and the circumferential edge 15B of the upper insulating plate 15, which has been engaged with the upper end face 20E of the outer can 20, is engaged with the locking part 20D formed by the upper end face 20E and the inclination part 20F.

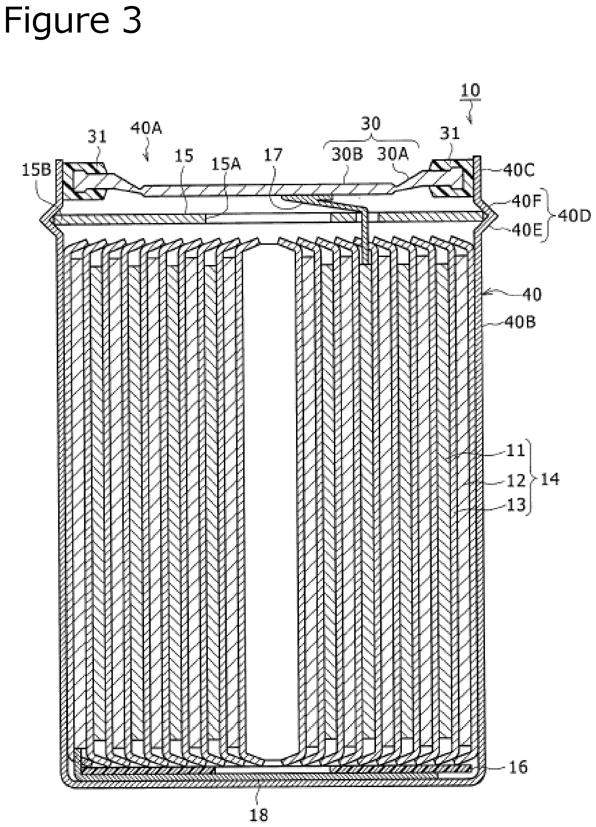

With reference to FIG. 3, a cylindrical battery 10 as another example of the embodiment will be described. FIG. 3 is a sectional view of the cylindrical battery 10.

As shown in FIG. 3, the cylindrical battery 10 comprises an electrode assembly 14, an electrolyte, an outer can 40 that houses the electrode assembly 14 and the electrolyte, and a sealing plate 30 that seals an opening 40A of the outer can 40. The cylindrical battery 10 further comprises an upper insulating plate 15 arranged above the electrode assembly 14 and a lower insulating plate 16 arranged below the electrode assembly 14. Since the cylindrical battery 10 in this example is similar to the cylindrical battery described in FIG. 1, description thereof will be omitted except for the upper insulating plate 15 and the outer can 20.

The upper insulating plate 15 is a member arranged above the electrode assembly 14 to insulate the electrode assembly 14 and the sealing plate 30. The upper insulating plate 15 is formed into a disk shape having an opening 15A formed at the center in the radial direction, and a through-hole. The diameter of the upper insulating plate 15 is larger than an inner diameter of a housing part 40B of the outer can 40 described later, and smaller than a maximum inner diameter of a locking part 40D described later.

The outer can 40 is a bottomed cylindrical metal container having a bottom and a cylinder part. The bottom has a disk shape, and the cylinder part is formed in a cylindrical shape along an outer circumferential edge of the bottom. The cylinder part, which is formed above the bottom, includes a housing part 40B that houses the electrode assembly 14, a caulking part 40C that allows the gasket 31 to be compressed to fix the sealing plate 30 by caulking, and a locking part 40D formed between the housing part 40B and the caulking part 40C to engage with a circumferential edge 15B of the upper insulating plate 15. The housing part 40B, the locking part 40D, and the caulking part 40C are identical in thickness.

The housing part 40B is a cylindrical portion that houses the electrode assembly 14. The housing part 40B has a height substantially identical to the height of the electrode assembly 14.

The caulking part 40C is a cylindrical portion to allow the gasket 31 to be compressed so as to fix the sealing plate 30 by caulking. The caulking part 40C is caulked in the radial direction and formed to be smaller in diameter than the locking part 40D. The caulking part 40C may have protrusions formed in a circumferential direction on its inner surface. This can increase the force to compress the gasket 31.

The locking part 40D is a portion formed between the housing part 40B and the caulking part 40C to engage with the circumferential edge 15B of the upper insulating plate 15. The locking part 40D is formed so as to include a diameter enlarged part 40E that is enlarged in diameter toward the upper side from the housing part 40B, and a connection part 40F that connects the diameter enlarged part 40E and the caulking part 40C.

The locking part 40D engages with the circumferential edge 15B of the upper insulating plate 15, and the upper insulating plate 15 is fixed to the outer can 40. More specifically, the circumferential edge 15B of the upper insulating plate 15 is interposed and fixed between the diameter enlarged part 40E and the connection part 40F. The locking part 40D can fix the upper insulating plate 15.

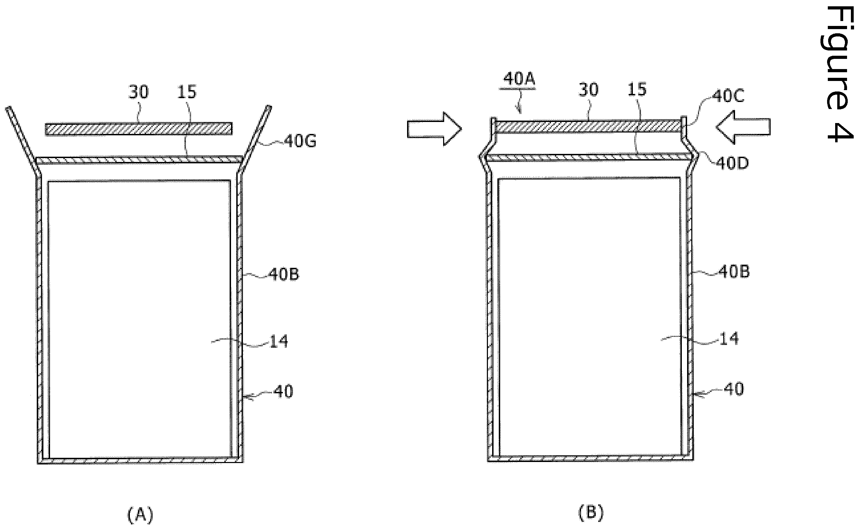

With reference to FIGS. 4(A) and 4(B), a manufacturing step of the cylindrical battery 10 will be described. FIGS. 4(A) and 4(B) are schematic views showing part of the manufacturing process.

In the manufacturing process of the cylindrical battery 10, the electrode assembly 14 and the outer can 40 are first manufactured, the outer can 40 having the housing part 40B that houses the electrode assembly 14 by drawing of a steel sheet and a diameter enlarged part 40G enlarged in diameter toward the upper side (a portion corresponding to the diameter enlarged part 40E, the connection part 40F, and the caulking part 40C of the cylindrical battery 10). Then, the electrode assembly 14 is inserted into the housing part 40B of the outer can 40.

Then, as shown in FIG. 4(A), the upper insulating plate 15 is engaged with a middle portion of the diameter enlarged part 40G of the outer can 40. Furthermore, as shown in FIG. 4(B), electrolyte is injected into the outer can 40, and the sealing plate 30 is inserted into the diameter enlarged part 40G of the outer can 20. Then, the diameter enlarged part 40G of the outer can 40 is caulked in the radial direction from the outside of the outer can 40 such that the opening 40A of the outer can 40 is sealed by the caulking part 40C through the gasket 31.

When the caulking part 40C of the outer can 40 is formed, a lower part of the caulking part 40C is formed as the connection part 40F, and the circumferential edge 15B of the upper insulating plate 15, which has been engaged with the middle portion of the diameter enlarged part 40G of the outer can 20, is engaged with the locking part 40D formed by the diameter enlarged part 40E and the connection part 40F.

It should be understood that the present invention is not limited to the embodiment and modifications disclosed, and various modifications and changes are possible without departing from the scope of the claims of the present application.

### REFERENCE SIGNS LIST

10 CYLINDRICAL BATTERY, 11 POSITIVE ELECTRODE PLATE, 12 NEGATIVE ELECTRODE PLATE, 13 SEPARATOR, 14 ELECTRODE ASSEMBLY, 15 UPPER INSULATING PLATE, 15A OPENING, 15B CIRCUMFERENTIAL EDGE, 16 LOWER INSULATING PLATE, 17 POSITIVE ELECTRODE LEAD, 18 NEGATIVE ELECTRODE LEAD, 20 OUTER CAN, 20A OPENING, 20B FIRST CYLINDER PART, 20C SECOND CYLINDER PART, 20D LOCKING PART, 20E UPPER END FACE, 20F INCLINATION PART, 30 SEALING PLATE, 30A CIRCUMFERENTIAL EDGE, 30B CENTER, 31 GASKET, 40 OUTER CAN, 40A OPENING, 40B HOUSING PART, 40C CAULKING PART, 40D LOCKING PART, 40E DIAMETER ENLARGED PART, 40F CONNECTION PART, 40G DIAMETER ENLARGED PART

## Claims

1. A cylindrical battery (10), comprising:
an electrode assembly (14) having a positive electrode plate (11) and a negative electrode plate (12) wound through a separator (13);
an electrolyte;
a bottomed cylindrical outer can (20) configured to house the electrode assembly (14) and the electrolyte;
a sealing plate (30) configured to seal an opening (20A) of the outer can (20);
a gasket (31) arranged on a circumferential edge (30A) of the sealing plate (30); and
an insulating plate (15) arranged between the electrode assembly (14) and the sealing plate (30), wherein
the gasket (31) is compressed in a radial direction between an end face of the circumferential edge (30A) of the sealing plate (30) and the outer can (20), and
the outer can (20) has a locking part (20D) to be engaged with a circumferential edge (15B) of the insulating plate (15).

2. The cylindrical battery (10) according to claim 1, wherein
the outer can (20) has a first cylinder part (20B) that houses the electrode assembly (14), and a second cylinder part (20C) that is smaller in thickness than the first cylinder part (20B) for compression of the gasket (31),
the locking part (20D) includes an upper end face (20E) of the first cylinder part (20B), and an inclination part (20F) that connects the first cylinder part (20B) and the second cylinder part (20C), the inclination part (20F) being identical in thickness to the second cylinder part (20C), and
the circumferential edge (15B) of the insulating plate (15) is interposed and fixed between an inner circumferential side of the upper end face (20E) of the first cylinder part (20B) and the inclination part (20F).

## Patentansprüche

1. Zylindrische Batterie (10), die Folgendes umfasst:
eine Elektrodenanordnung (14), die eine positive Elektrodenplatte (11) und eine negative Elektrodenplatte (12) aufweist, die durch einen Separator (13) gewickelt sind;
einen Elektrolyt;
einen zylindrischen Außenbehälter (20) mit Boden, der dazu ausgelegt ist, die Elektrodenanordnung (14) und den Elektrolyt aufzunehmen;
eine Dichtungsplatte (30), die dazu ausgelegt ist, eine Öffnung (20A) des Außenbehälters (20) abzudichten;
einen Dichtring (31), der auf einer Umfangskante (30A) der Dichtungsplatte (30) angeordnet ist; und
eine Isolierplatte (15), die zwischen der Elektrodenanordnung (14) und der Dichtungsplatte (30) angeordnet ist, wobei
der Dichtring (31) in einer Radialrichtung zwischen einer Stirnfläche der Umfangskante (30A) der Dichtungsplatte (30) und dem Außenbehälter (20) komprimiert ist, und
der Außenbehälter (20) ein Verriegelungsteil (20D) aufweist, das in eine Umfangskante (15B) der Isolierplatte (15) eingreifen soll.

2. Zylindrische Batterie (10) nach Anspruch **1,** wobei
der Außenbehälter (20) ein erstes Zylinderteil (20B), in das die Elektrodenanordnung (14) aufgenommen ist, und ein zweites Zylinderteil (20C), das in der Dicke kleiner ist als das erste Zylinderteil (20B), zur Komprimierung des Dichtrings (31) aufweist,
das Verriegelungsteil (20D) eine obere Stirnfläche (20E) des ersten Zylinderteils (20B) und ein Neigungsteil (20F), das das erste Zylinderteil (20B) und das zweite Zylinderteil (20C) verbindet, beinhaltet, wobei das Neigungsteil (20F) in der Dicke mit dem zweiten Zylinderteil (20C) identisch ist, und
die Umfangskante (15B) der Isolierplatte (15) zwischen einer inneren Umfangsseite der oberen Stirnfläche (20E) des ersten Zylinderteils (20B) und dem Neigungsteil (20F) eingefügt und befestigt ist.

## Revendications

1. Batterie cylindrique (10) comprenant :
un ensemble d'électrodes (14) ayant une électrode plane positive (11) et une électrode plane négative (12) enroulées par le biais d'un séparateur (13) ;
un électrolyte ;
un boîtier externe cylindrique à fond (20) configuré pour loger l'ensemble d'électrodes (14) et l'électrolyte ;
une plaque d'étanchéité (30) configurée pour sceller une ouverture (20A) du boîtier externe (20) ;
une plaque d'étanchéité (30) configurée pour sceller une ouverture (20A) du boîtier externe (20) ;
un joint (31) agencé sur un bord circonférentiel (30A) de la plaque d'étanchéité (30) ; et
une plaque isolante (15) agencée entre l'ensemble d'électrodes (14) et la plaque d'étanchéité (30), dans laquelle :
le joint (31) est comprimé dans une direction radiale entre une face d'extrémité du bord circonférentiel (30A) de la plaque d'étanchéité (30) et le boîtier externe (20), et
le boîtier externe (20) a une partie de verrouillage (20D) destinée à être mise en prise avec un bord circonférentiel (15B) de la plaque isolante (15).

2. Batterie cylindrique (10) selon la revendication 1, dans laquelle :
le boîtier externe (20) a une première partie de cylindre (20B) qui loge l'ensemble d'électrodes (14) et une seconde partie de cylindre (20C) qui est plus petite, du point de vue de l'épaisseur, que la première partie de cylindre (20B) pour la compression du joint (31),
la partie de verrouillage (20D) comprend une face d'extrémité supérieure (20E) de la première partie de cylindre (20B) et une partie d'inclinaison (20F) qui raccorde la première partie de cylindre (20B) et la seconde partie de cylindre (20C), la partie d'inclinaison (20F) étant identique, du point de vue de l'épaisseur, à la seconde partie de cylindre (20C), et
le bord circonférentiel (15B) de la plaque isolante (15) est intercalé et fixé entre un côté circonférentiel interne de la face d'extrémité supérieure (20E) de la première partie de cylindre (20B) et la partie d'inclinaison (20F).
